# EUROPÄISCHE PATENTSCHRIFT

(11) **EP 4 077 041 B1**
(45) Veröffentlichungstag und Bekanntmachung des Hinweises auf die Patenterteilung: **21.08.2024**
(21) Anmeldenummer: 20824184.4
(22) Anmeldetag: 09.12.2020
(51) Int. Cl.: B60N 2/07, B60N 2/08, B60N 2/14, B60N 2/24, E02F 9/16

(54) **BEDIENSTAND ALS AUSTAUSCHBARE MONTAGEEINHEIT SOWIE FÜHRERHAUS MIT EINEM SOLCHEN BEDIENSTAND**
OPERATOR PLATFORM AS AN EXCHANGEABLE ASSEMBLY UNIT, AND DRIVER'S CAB WITH AN OPERATOR PLATFORM OF THIS KIND
PLATE-FORME D'OPÉRATEUR EN TANT QU'UNITÉ D'ASSEMBLAGE INTERCHANGEABLE ET CABINE DE CONDUITE ÉQUIPÉE D'UNE TELLE PLATE-FORME D'OPÉRATEUR

(30) Priorität: 17.12.2019 DE 102019219903
(43) Veröffentlichungstag der Anmeldung: 26.10.2022
(73) Patentinhaber: W. Gessmann GmbH, 74211 Leingarten (DE)
(72) Erfinder: EGGENSPERGER, Martin, 74078 Heilbronn (DE); DOBERSTEIN, Wilhelm, 74252 Massenbachhausen (DE); HERZIG, Andrew, 74226 Nordheim (DE)
(74) Vertreter: Kohler Schmid Möbus Patentanwälte
(86) Internationale Anmeldenummer: PCT/EP2020/085264
(87) Internationale Veröffentlichungsnummer: WO 2021/122217

(56) Entgegenhaltungen:
- EP-A1- 3 524 468
- CN-U- 207 481 712
- DE-A1- 19 813 474
- KR-U- 970 031 679
- KR-Y1- 0 130 035
- US-A1- 2010 275 472

## Beschreibung

### Hintergrund der Erfindung

Die Erfindung betrifft einen Bedienstand, insbesondere für eine mobile Baumaschine, mit einer Bodenplatte, einem Steuermittel und einem Sitz, wobei der Sitz zur Verbesserung der Sichtverhältnisse und des Ein- und Ausstiegs verstellbar ausgebildet ist.

Bedienstände sind aus dem Stand der Technik bereits bekannt geworden und weisen ein an einer Maschine mitgeführtes Steuermittel zum Steuern der Maschine auf. Herkömmliche Bedienstände weisen darüber hinaus eine Sitzmöglichkeit für einen Bediener der Maschine auf. Insbesondere bei unübersichtlichen Maschinen ist dabei die Sitzmöglichkeit in Abhängigkeit der Sichtverhältnisse verstellbar, um ein möglichst weites Umfeld der Maschine überwachen zu können.

Aus der Patentschrift DD147381 A1 ist ein Bedienstand für eine mobile Verdichtungsmaschine bekannt geworden, der zur Verbesserung der Sichtverhältnisse komplett seitlich nach rechts oder links geschwenkt werden kann.

Der Bedienstand muss dabei jedoch als gesamte Einheit über die Drehvorrichtung gelagert werden, was hohe Voraussetzungen an die Festigkeit des Lagerkonzepts stellt. Zudem lässt sich zwar der Bedienstand in einem weiten Winkelbereich um die Rotationsachse drehen, jedoch ist das Steuermittel derart zur Sitzmöglichkeit des Bedieners ausgerichtet, dass die Blickrichtung des Bedieners stets zur Rotationsachse gerichtet ist. Eine Längs- oder Querverstellung ist dagegen nicht möglich. Weiterhin wird die Übersichtlichkeit wesentlich durch das Gewicht des Bedienstands bestimmt, was den Einsatz einer Überdachung oder eines Führerhauses verhindert.

Die Offenbarung DE19813474 A1 zeigt ein anderes Beispiel aus dem Stand der Technik, welches eine Bodenverdichtungsmaschine mit mindestens einer Walzeneinheit, einem Antriebsmotor und einem Fahrstand betrifft, wobei der Fahrstand einen Sitz und ein Bedienpult aufweist, wobei der Fahrstand an einem Rahmen der Bodenverdichtungsmaschine befestigte Führungen und eine auf den Führungen verschiebliche Fahrstandslafette derart aufweist, dass die Fahrstandslafette quer zur Längsachse der Bodenverdichtungsmaschine verschieblich ist.

### Aufgabe der Erfindung

Es ist Aufgabe der Erfindung einen Bedienstand bereitzustellen, der eine translatorische und eine rotatorische Verstellung der Sitzmöglichkeit bei mitgeführtem Steuermittel zulässt und dabei auf einfache Weise in einem Führerhaus eingesetzt werden kann.

### Beschreibung der Erfindung

Diese Aufgabe wird erfindungsgemäß gelöst durch einen Bedienstand gemäß Patentanspruch 1.

Der Bedienstand ist als austauschbare Montageeinheit ausgebildet. Hierdurch kann die Fertigung besonders günstig unabhängig von der zu bedienenden Maschine erfolgen. Der Bedienstand umfasst alle funktionsrelevanten Komponenten und muss daher lediglich an der zu bedienenden Maschine über eine mechanische und elektrische Verbindung angeordnet werden.

Der Bedienstand weist dabei zumindest eine Bodenplatte, einen Schlitten, eine Sitzkonsole, eine Führung sowie Führungsmittel auf. Darüber hinaus sind weitere Komponenten vorstellbar. Die Aufzählung ist nicht abschließend zu verstehen.

Die Bodenplatte weist eine erste und eine zweite Durchgangsausnehmung auf, die den Bereich unterhalb der Bodenplatte mit dem Bereich oberhalb der Bodenplatte verbindet. Die Bodenplatte weist eine Haupterstreckungsrichtung auf, entlang derer eine erste und eine zweite Durchgangsausnehmung in der Bodenplatte ausgebildet sind. Die Haupterstreckungsrichtung der Bodenplatte richtet sich dabei nach dem an der zu bedienenden Maschine zur Verfügung stehenden Einbauraum. Beispielsweise kann hierbei die Breite eines zur Verfügung stehenden Führerhauses maßgeblich für die Länge der Bodenplatte in Haupterstreckungsrichtung sein.

Die erste und die zweite Durchgangsausnehmung dienen der Aufnahme von Führungsmitteln, die den an dem Führungsmittel angeordneten sich oberhalb der Bodenplatte befindenden Schlitten entlang einer unterhalb der Bodenplatte angeordneten Führung führen. Die Führung erfolgt dabei insbesondere linear. Die Führungsmittel durchgreifen dabei die erste und die zweite Durchgangsausnehmung, wobei die Endlagen der ersten und zweiten Durchgangsausnehmung in Haupterstreckungsrichtung einen maximalen Verfahrweg der Führungsmittel innerhalb der ersten und zweiten Durchgangsausnehmung bestimmen.

Für die translatorische Verschiebbarkeit des Schlittens sind mithin nur zwei Durchgangsausnehmungen in der Bodenplatte erforderlich, beziehungsweise angeordnet. Dadurch kann bei kippstabiler Führung des Schlittens Schmutzeintrag in die Führung vermindert und die Herstellung kosteneffizienter realisiert werden.

Die erste und die zweite Durchgangsausnehmung ist dabei besonders vorteilhaft in Form einer linearen Schlitzöffnung ausgebildet. Darüber hinaus sind jedoch auch andere Ausbildungen der ersten und zweiten Durchgangsausnehmung denkbar.

Besonders bevorzugt ist die Bodenplatte in Rechteckform ausgebildet, was sich besonders günstig auf eine maximale Erstreckung der ersten und zweiten Durchgangsausnehmung und damit die maximale Querverstellung auswirkt. Generell kann jedoch auch eine andere Form der Bodenplatte ausgebildet werden. Dies kann insbesondere bei nicht linear ausgebildeter Führung vorteilhaft sein.

Der Schlitten ist oberhalb der Bodenplatte angeordnet und entlang einer unterhalb der Bodenplatte angeordneten Führung geführt. Dabei erfolgt der Lastabtrag des Schlittens über die Führungsmittel und die Führung. Zwischen Schlitten und Bodenplatte ist ein Luftspalt ausgebildet, der ein reibungsfreies Gleiten des Schlittens über die Bodenplatte ermöglicht.

Der Schlitten dient zudem der Übertragung der translatorischen Bewegung durch die Führung auf die am Schlitten angeordneten Komponenten des Bedienstands.

Oberhalb des Schlittens kann eine Sitzkonsole lösbar, insbesondere über Schraubverbindungen, angeordnet. Die Sitzkonsole ist mehrteilig ausgebildet und weist einen an dem Schlitten angeordneten undrehbaren Konsolenteil und einen relativ zum Schlitten und dem undrehbaren Konsolenteil drehbar angeordneten Konsolenteil auf. Hierdurch kann die Sitzkonsole über den Schlitten translatorisch bewegt und über den drehbaren Konsolenteil relativ zum Schlitten verdreht werden.

In einer bevorzugten Ausführungsform der Erfindung ist in der ersten und/oder zweiten Durchgangsausnehmung der Bodenplatte eine Abstreifvorrichtung und/oder Dichtvorrichtung, insbesondere eine Bürstendichtung, angeordnet. Die Abstreifvorrichtung kann in und/oder an der ersten und/oder der zweiten Durchgangsausnehmung an der Oberseite und/oder der Unterseite der Bodenplatte angeordnet sein. Hierdurch kann eine Verbindung des Bereichs unterhalb der Bodenplatte und des Bereichs oberhalb der Bodenplatte ohne die Gefahr des Schmutzeintrags in die Führung erfolgen.

Darüber hinaus sind andere Arten von Abstreifvorrichtung denkbar. Beispielhaft, jedoch nicht abschließend, sind an dieser Stelle Elastomer-Abstreifvorrichtungen genannt.

Zudem können der Schlitten und/oder die Führungsmittel eine Abstreifvorrichtung aufweisen, die entlang der geführten Bewegung Verschmutzungen von der Bodenplatte entfernen. Hierdurch kann einem Schmutzeintrag durch die erste und oder zweite Durchgangsausnehmung vorbeugend entgegengetreten werden.

Die Hebelmechanik dient der Verstellung eines Sitzes und ist dazu ausgebildet, die translatorischen und/oder rotatorischen Bewegungsfreiheitsgrade des Schlittens und der Sitzkonsole freizugeben und/oder zu blockieren. Hierzu kann der Bedienstand zumindest eine Verriegelungsvorrichtung, insbesondere mehrere, besonders bevorzugt eine translatorische Verriegelungsvorrichtung und eine Rotationsverriegelung, aufweisen. Hinsichtlich der Sicherheit ist eine Blockade der Bewegungsfreiheitsgrade durch die zumindest eine Verriegelungsvorrichtung in einer unbetätigten Lage (Nulllage) des Betätigungsglieds besonders günstig.

Weiterhin bevorzugt ist eine Ausführungsform der Erfindung, bei der die Sitzkonsole eine Hebelmechanik mit einem bifunktionalen Betätigungsglied, insbesondere einem Hebel, umfasst. Ein bifunktionales Betätigungsglied ermöglicht dabei besonders vorteilhaft das Ausführen zweier Funktionen, insbesondere der Steuerung zweier Vorrichtungen zu Verriegelungszwecken von Bewegungsfreiheiten des Bedienstands.

In einer bevorzugten Weiterbildung der Erfindung ist vorgesehen, dass sich das Betätigungsglied über zumindest zwei, insbesondere drei, Seiten der Sitzkonsole erstreckt. Dies ermöglicht das besonders einfache Betätigen des Betätigungsglieds mit der rechten und/oder der linken Hand beziehungsweise mit dem rechten und/oder dem linken Fuß.

Weiterhin bevorzugt ist eine Weiterbildung der Erfindung, bei der das Betätigungsglied in Form eines gebogenen Rohrs und/oder in Form eines Blech-Biegeteils ausgebildet ist.

Besonders bevorzugt kann das Betätigungsglied zumindest zwei parallele Teilabschnitte, insbesondere in Form eines Bügels, zur besseren Bedienbarkeit ausbilden. Hierdurch kann ein breiterer Griff des Betätigungsglieds ohne unnötigen zusätzlichen Materialeintrag ausgebildet werden und erleichtert zudem die Betätigung des Betätigungsglieds mit dem Fuß.

Bei einer bevorzugten Weiterbildung der Erfindung ist die Hebelmechanik zur Verriegelung und Entriegelung des Schlittens und/oder der Sitzkonsole ausgebildet.

Besonders bevorzugt ist eine Weiterbildung der Erfindung, bei der die Hebelmechanik unterhalb der Bodenplatte eine Verriegelungsvorrichtung, insbesondere ein Zahnsegment, besonders bevorzugt eine Zahnstange, aufweist. Hierdurch kann der zur Verfügung stehende Bauraum besonders effektiv genutzt und die Verriegelungsvorrichtung effektiv vor Verschmutzung geschützt werden.

Bevorzugt ist eine Weiterbildung der Erfindung, bei der die Hebelmechanik dazu ausgebildet ist, den Schlitten durch Bewegung des bifunktionalen Betätigungsglieds in Richtung der Bodenplatte zu entriegeln. Mit anderen Worten ist das bifunktionale Betätigungsglied in Kombination mit der Hebelmechanik dazu ausgebildet, in einer ersten Betätigungsrichtung, insbesondere einer Abwärtsbewegung, des Betätigungsglieds einen, insbesondere den translatorischen, Bewegungsfreiheitsgrad des Bedienstands freizugeben.

Gemäß einer bevorzugten Weiterbildung der Erfindung ist vorgesehen, dass die Hebelmechanik dazu ausgebildet ist, die Sitzkonsole durch Bewegung des bifunktionalen Betätigungsgliedes in einer von der Bodenplatte wegweisenden Richtung zu entriegeln. Mit anderen Worten ist das bifunktionale Betätigungsglied in Kombination mit der Hebelmechanik dazu ausgebildet, in einer zweiten Betätigungsrichtung, insbesondere einer Aufwärtsbewegung, des Betätigungsglieds eine, insbesondere rotatorische, Bewegungsfreiheit des Bedienstands, insbesondere der Sitzkonsole, freizugeben.

Weiterhin bevorzugt ist eine Weiterbildung der Erfindung, bei der die Hebelmechanik dazu ausgebildet ist, bei Entriegelung des Schlittens die Sitzkonsole zu verriegeln und/oder bei Entriegelung der Sitzkonsole den Schlitten zu verriegeln. Mit anderen Worten kann bei Freigabe des translatorischen Bewegungsfreiheitsgrades der rotatorische Bewegungsfreiheitsgrad und bei Freigabe des rotatorischen Freiheitsgrades der translatorische Bewegungsfreiheitsgrad des Bedienstands weiterhin blockiert werden. Hierdurch kann ein unbeabsichtigtes Verstellen besonders einfach verhindert werden.

In einer bevorzugten Ausführungsform der Erfindung ist vorgesehen, dass die Führung mehrteilig ausgebildet ist. Die Führung kann dabei insbesondere örtlich beabstandete in ihrer Führungsrichtung parallel verlaufende Teilführungen aufweisen. Die Teilführungen können dabei unterschiedlich ausgebildet sein.

Eine bevorzugte Weiterbildung der Erfindung sieht vor, dass die Führung eine Stangenführung und/oder eine Rollenführung, insbesondere eine Kegelrollenführung, aufweist. Hierdurch können die Vorteile verschiedener Führungsarten besonders effektiv kombiniert werden.

Besonders bevorzugt ist eine Weiterbildung der Erfindung, bei der die Rollenführung eine an der Rollenführung angeordnete, der Rollenführung vorlaufende und/oder nachlaufende Abstreifvorrichtung, insbesondere Abstreifbürsten und/oder eine Elastomer-Dichtung, aufweist. Auf diese Weise kann eine Reinigung der Führung besonders vorteilhaft während des Betriebs durchgeführt werden.

Weiterhin bevorzugt ist eine Ausführungsform der Erfindung, bei der der Schlitten und/oder die Sitzkonsole eine Kabeldurchführung aufweist und elektrische Steuerleitungen des Bedienstands durch die erste und/oder zweite Durchgangsausnehmung, insbesondere an und/oder in einem Führungsmittel, geführt sind. Hierdurch kann eine weitere Durchgangsausnehmung in der Bodenplatte kostengünstig vermieden werden.

In einer bevorzugten Ausführungsform der Erfindung, ist die erste und/oder die zweite Durchgangsausnehmung zur Durchführung einer Leitung ausgebildet. Hierbei kann die erste und/oder die zweite Durchgangsausnehmung Aussparungen und/oder Ausnehmungen, insbesondere an der ersten und/oder zweiten Durchgangsausnehmung, aufweisen, um eine Kabeldurchführung parallel zum Führungsmittel durch die erste und/oder zweite Durchgangsausnehmung zu führen.

Weiterhin bevorzugt ist eine Ausführungsform der Erfindung, bei der an dem Führungsmittel ein Kabelkanal, insbesondere eine Schleppkette, angeordnet ist. Hierdurch kann bei Verfahren des Schlittens zusätzliches Kabel bereitgestellt und/oder aufgenommen werden und eine Kollision mit beweglichen Komponenten des Bedienstands verhindert werden.

Besonders bevorzugt ist eine Ausführungsform der Erfindung, bei der das Führungsmittel zur Durchführung einer Leitung, insbesondere eines Kabels, ausgebildet ist. Hierzu kann das Führungsmittel eine vertikale Durchgangsausnehmung von der Unterseite zur Oberseite der Bodenplatte aufweisen. Besonders bevorzugt kann das Führungsmittel innerhalb einer ersten und/oder zweiten Durchgangsausnehmung zweiteilig, insbesondere in Haupterstreckungsrichtung der ersten und/oder zweiten Durchgangsausnehmung, ausgebildet sein, wobei die Leitung zwischen den Teilen des Führungsmittels durch die erste und/oder zweite Durchgangsausnehmung geführt ist.

In einer bevorzugten Ausführungsform der Erfindung ist vorgesehen, dass das Führungsmittel eine Armierung im überwiegenden Bereich der Kabeldurchführung aufweist. Dies ermöglicht eine besonders geschützte Durchführung der Leitung, insbesondere des Kabels, während des Verfahrens des Schlittens.

Weiterhin bevorzugt ist eine Ausführungsform der Erfindung, bei der die Sitzkonsole relativ zum Schlitten höhenverstellbar und/oder neigbar ausgebildet ist. Hierzu kann die Sitzkonsole eine Höhenverstellung und/oder eine Neigungsverstellung aufweisen. Die Höhenverstellung und/oder Neigungsverstellung kann insbesondere eine Verriegelungsvorrichtung aufweisen mit der die Höhenverstellung und/oder Neigungsverstellung in einer bestimmten Lage dauerhaft gehalten wird.

Die erfindungsgemäße Aufgabe wird weiterhin gelöst durch ein Führerhaus gemäß Patentanspruch 20.

Das erfindungsgemäße Führerhaus für eine mobile Baumaschine mit einer seitlichen und/oder oberseitigen Öffnung ist dazu ausgebildet, eine Montageeinheit, insbesondere nach einem der vorhergehenden Ansprüche, durch Einschieben und/oder Einsetzen in dem Führerhaus anzuordnen.

Weitere Merkmale und Vorteile der Erfindung ergeben sich aus der Beschreibung und der Zeichnung. Die vorstehend genannten und die noch weiter ausgeführten Merkmale können erfindungsgemäß jeweils einzeln für sich oder zu mehreren in beliebigen, zweckmäßigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: zeigt eine Baumaschine mit einer an der Baumaschine angeordneten Ausführungsform eines erfindungsgemäßen Bedienstands in einer Seitenansicht;
- Fig. 2: zeigt den Bedienstand aus Fig. 1 in einer geschnittenen Seitenansicht;
- Fig. 3: zeigt einen Teil des Bedienstands aus Fig. 1 in einer geschnittenen Seitenansicht mit Schlitten und Führung;
- Fig. 4: zeigt in einem geschnittenen Teilbereich eine Hebelmechanik des Bedienstands aus Fig. 1 in einer ersten funktionalen Stellung;
- Fig. 5: zeigt in dem geschnittenen Teilbereich aus Fig. 5 die Hebelmechanik des Bedienstands aus Fig. 1 in einer zweiten funktionalen Stellung;
- Fig. 6: zeigt einen weiteren Horizontalschnitt durch den Bedienstand aus Fig. 1 mit Blick auf eine Kabelführung.

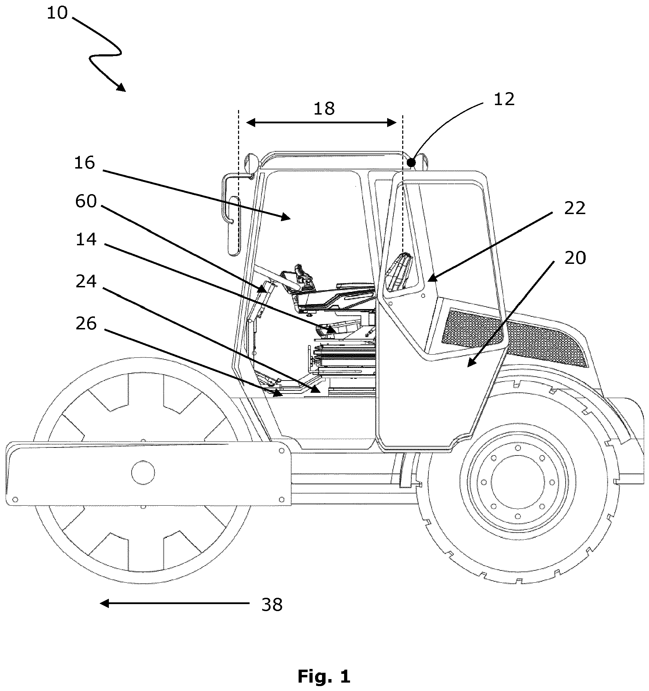

**Fig.** 1 zeigt eine Baumaschine **10** mit einem Führerhaus **12** und einen in dem Führerhaus 12 angeordneten Bedienstand **14** in Form einer austauschbaren Montageeinheit. Das Führerhaus 12 weist dabei eine Montageöffnung **16** mit einer lichten Öffnungsweite **18** auf, durch die der Bedienstand 14 als komplette Montageeinheit zur Anordnung im Inneren des Führerhauses 12 eingesetzt, insbesondere eingeschoben, werden kann. Hierzu kann erforderlich sein, dass eine Führerhaustüre **20,** insbesondere mitsamt der Rahmenstruktur **22** der Führerhaustüre 20, erst nach Anordnung des Bedienstands 14 im Inneren des Führerhauses 12 an dem Führerhaus 12 angeordnet oder zum Zweck der Anordnung vorübergehend demontiert wird.

Alternativ oder zusätzlich kann vorgesehen sein, dass das Führerhaus 12 die Montageöffnung 16 an der Rückseite und/oder der Oberseite aufweist.

Dies ermöglicht eine besonders vorteilhafte getrennte Fertigung der Baumaschine 10 und des Bedienstands 14. Weiterhin vorteilhaft ist das besonders einfache Aus- und/oder Umrüsten bereits vorhandener Baumaschinen 10. Beispielsweise kann eine defekte Baumaschine 10 und/oder ein defekter Bedienstand 14 besonders einfach durch Auswechseln des Bedienstands 14 instand gesetzt werden.

Der Bedienstand 14 weist eine Bodenplatte **24** auf, die in Einbaulage im Innenraum des Führerhauses 12 bündig mit einem Führerhausboden **26** ausgeführt ist. Hierdurch können sicherheitskritische Unebenheiten (Stolperfallen) im Führerhaus 12 besonders gut vermieden werden und die Reinigung ist vereinfacht.

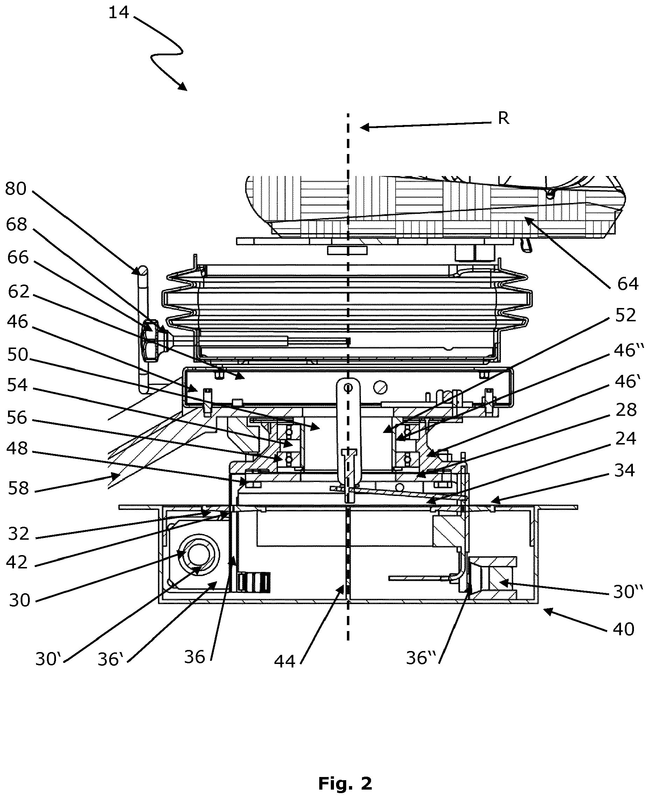

**Fig. 2** zeigt den Bedienstand 14 aus Fig. 1 in einer vertikal geschnittenen Ansicht. Ein Schlitten **28** ist durch einen Luftspalt von der Bodenplatte 24 beabstandet, oberhalb der Bodenplatte 24 angeordnet. Mit anderen Worten steht der Schlitten 28 nicht in lastabtragendem Kontakt mit der Bodenplatte 24. Eine Führung **30** ist unterhalb der Bodenplatte 24 des Bedienstands 14 angeordnet. Die Bodenplatte 24 weist eine erste Durchgangsausnehmung **32** und eine zweite Durchgangsausnehmung **34** auf. Die Durchgangsausnehmungen 32, 34 erstrecken sich gemäß Fig. 2 hauptsächlich entlang einer in die Zeichenebene gerichteten Achse und sind in Form von Schlitzöffnungen ausgebildet. Mit anderen Worten verbinden die erste Durchgangsausnehmung 32 und die zweite Durchgangsausnehmung 34 die Bereiche unterhalb und oberhalb der Bodenplatte 24.

Der Schlitten 28 ist über Führungsmittel **36** an der Führung 30 geführt. Die Führungsmittel 36 durchgreifen dabei, ausgehend von dem oberhalb der Bodenplatte 24 angeordneten Schlitten 28, die Bodenplatte 24 in einer vertikalen Richtung bis zur der unterhalb der Bodenplatte 24 angeordneten Führung 30. Das Führungsmittel 36 ist dabei unterhalb der ersten Durchgangsausnehmung 32 in Form einer Buchse **36'** mit einer zylindrischen Ausnehmung, insbesondere eine Durchgangsausnehmung, ausgebildet und umschließt eine Stangenführung **30'** der Führung 30. Unterhalb der zweiten Durchgangsausnehmung 34 der Bodenplatte 24 ist das Führungsmittel 36 in Form einer Kegelrolle **36"** ausgebildet. Komplementär zu dem Führungsmittel 36 in Form der Kegelrolle 36" weist die Führung 30 eine Kegelrollenführung **30"** auf. Die Führung 30 erstreckt sich dabei in Form einer Linearführung überwiegend entlang einer in die Zeichenebene gerichteten Achse, beziehungsweise parallel zur Erstreckung der ersten und zweiten Durchgangsausnehmung 32, 34. Mit anderen Worten führt die Führung 30 den Schlitten 28 über die Führungsmittel 36 entlang einer Achse in Haupterstreckungsrichtung der Führung 30, beziehungsweise quer zu einer Ausrichtung des Bedienstands 14, bei Einbaulage des Bedienstands 14 in Längsrichtung **38** der Baumaschine 10 (siehe Fig. 1).

Die Angabe der Einbaulage bezieht sich dabei beispielhaft auf die gezeigte Ausführungsform gemäß Fig. 1 und kann einsatzbedingt unterschiedlich sein.

Die Führung 30 ist über ein Gehäuse **40** an der Bodenplatte 24 angeordnet. Mit anderen Worten ist der Schlitten 28 über die Führung 30 lediglich entlang der Führung 30 geführt, während die übrigen translatorischen und rotatorischen Bewegungen des Schlittens 28 durch die Führung 30 verhindert werden. Der Führung 30 kommt in der gezeigten Ausführungsform eine lastabtragende Lagerfunktion zu und ermöglicht im Verbund mit dem Luftspalt zwischen Bodenplatte 24 und Schlitten 28 ein beabstandetes, reibungsfreies Gleiten des Schlittens 28 über die Bodenplatte 24 sowie ein Gleiten des Führungsmittels 36 innerhalb der ersten und zweiten Durchgangsausnehmung 32, 34.

Das Führungsmittel 36 ist in der gezeigten Ausführungsform gemäß Fig. 2 mehrteilig ausgebildet und unlösbar an dem Schlitten 28 angeordnet. Generell ist jedoch ebenso eine lösbare Anordnung am Schlitten 28 möglich. Darüber hinaus ist ebenso eine einstückige Ausbildung des Führungsmittels 36, insbesondere in Kombination mit einer lösbaren und/oder unlösbaren Anordnung am Schlitten 28, denkbar.

Die Bodenplatte 24 weist in der ersten und der zweiten Durchgangsausnehmung 32, 34 eine Abstreifvorrichtung **42** in Form einer Bürstendichtung auf. Die Abstreifvorrichtung 42 verhindert dabei effektiv den Eintrag von Verschmutzungen durch die erste und die zweite Durchgangsausnehmung 32, 34. Die dargestellte Abstreifvorrichtung 42 in Form der Bürstendichtung ist dabei beispielhaft zu verstehen. Denkbar sind darüber hinaus weitere Ausführungsformen der Abstreifvorrichtung 42 sowie deren Anordnung in und/oder an den Durchgangsausnehmungen 32, 34 sowohl unterhalb als auch oberhalb der Bodenplatte 24. Weiterhin ist eine Anordnung der Abstreifvorrichtung 42 am Schlitten 28 oder dem Führungsmittel 36, beispielsweise in Form einer Bürstendichtung und/oder einer Elastomer-Dichtlippe vorstellbar.

Das Gehäuse 40 ist in Form einer nach oben geöffneten Wanne ausgebildet und weist Winkel zur Stützung der das Gehäuse 40 deckelnden Bodenplatte 24 auf. Die Führung 30 sowie der unterhalb der Bodenplatte 24 ausgebildete Teil des Führungsmittels 36 befindet sich innerhalb des Gehäuses 40. Hierdurch kann eine Verschmutzung des Innenbereichs des Gehäuses 40 sowie der Führung 30 und des Führungsmittels 36 effektiv verhindert werden. Zur verbesserten Stabilität und Lagerung der Bodenplatte 24, weist das Gehäuse 40 zudem eine Innenwandung **44** auf.

Der Schlitten 28 weist eine oberseitig angeordnete Sitzkonsole **46** auf. Die Sitzkonsole 46 ist mehrteilig und weist einen undrehbaren Konsolenteil **46'** und einen an der Oberseite des undrehbaren Konsolenteils 46' angeordneten drehbaren Konsolenteil **46"** auf. Der undrehbare Konsolenteil 46' ist über Schraubverbindungen **48** lösbar an dem Schlitten 28 angeordnet. Der undrehbare Konsolenteil 46' weist auf einer vertikalen Achse durch seinen geometrischen Mittelpunkt eine vertikale zylindrische Konsolenausnehmung **50,** zur Anordnung des drehbaren Konsolenteils 46" auf. Komplementär zur Konsolenausnehmung 50, weist der drehbare Konsolenteil 46" einen vertikalen zylindrischen Vorsprung **52** zur Anordnung in der Konsolenausnehmung 50 auf. Mit anderen Worten wird der drehbare Konsolenteil 46" in Schwerkraftrichtung in den undrehbaren Konsolenteil 46' gesteckt. Im radialen Zwischenbereich **54** der Konsolenteile 46', 46" sind Kugellager **56** angeordnet und stellen eine konstante Gleichbeabstandung zwischen dem undrehbaren Konsolenteil 46' und dem drehbaren Konsolenteil 46" sowie eine möglichst reibungsfreie relative Drehbewegung zwischen dem undrehbaren Konsolenteil 46' und dem drehbaren Konsolenteil 46" um eine gemeinsame vertikale Rotationsachse **R** sicher.

Gemäß der Ausführungsform in Fig. 2, bildet der drehbare Konsolenteil 46" einen radialen Ausleger **58,** zur Anordnung eines Steuermittels **60** (siehe Fig. 1) in Form einer Lenkungseinheit aus. Hierdurch kann das Steuermittel 60 besonders vorteilhaft der Drehbewegung des drehbaren Konsolenteils 46" folgen. Generell ist ebenso eine lösbare oder unlösbare Anordnung des radialen Auslegers 58 und/oder des Steuermittels 60 an dem drehbaren Konsolenteil 46" vorstellbar.

Weiterhin weist der drehbare Konsolenteil 46" eine oberseitige Plattform **62** mit einem daran lösbar angeordneten Sitz **64** auf. Der Sitz 64 ist dabei mittels Schraubverbindungen an dem drehbaren Konsolenteil 46" befestigt. Der Sitz 64 weist eine Höhenverstellung **66** und eine Neigungsverstellung **68** auf.

In kombinierter Wirkung der Führung 30 und dem daran über Führungsmittel 36 angeordneten Schlitten 28, dem undrehbaren Konsolenteil 46' sowie dem drehbaren Konsolenteil 46" lässt sich der Sitz 64 und das Steuermittel 60 in einer zur Bodenplatte 24 parallelen Ebene in einer Querrichtung translatorisch bewegen und um eine vertikale Rotationsachse R relativ zur Bodenplatte 24 drehen. Alternativ oder zusätzlich kann eine überlagerte Bewegung in vertikaler Richtung oder eine Neigungsbewegung aus der zur Bodenplatte 24 parallelen Ebene durch die Höhen- und/oder Neigungsverstellung 66, 68 des Sitzes 64 erfolgen.

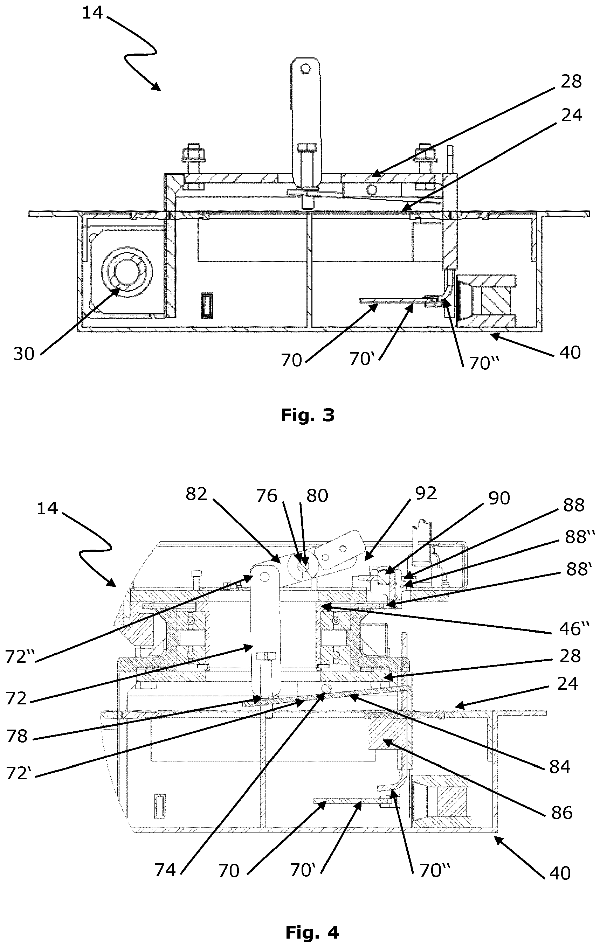

**Fig. 3** zeigt die Bodenplatte 24, den Schlitten 28, die Führung 30, das Führungsmittel 36 und das Gehäuse 40 in einem vertikalen Querschnitt des Bedienstands 14 aus Fig. 1 und Fig. 2.

Unterhalb der Bodenplatte 24 weist der Bedienstand 14 eine Verriegelungsvorrichtung **70** mit einer unbeweglichen Verriegelungskomponente **70'** in Form eines sich parallel zur Führung 30 erstreckenden Zahnsegments und einer beweglichen Verriegelungskomponente **70"** in Form eines Riegels auf. In einem Verriegelungszustand greift die bewegliche Verriegelungskomponente 70" in die unbewegliche Verriegelungskomponente 70' und verhindert damit eine Relativbewegung der Komponenten zueinander.

**Fig.** 4 zeigt eine Detailansicht des Bedienstands 14 aus den Fig. 1 und 2. Die unbewegliche Verriegelungskomponente 70' ist unlösbar an dem Gehäuse 40 angeordnet. Die bewegliche Verriegelungskomponente 70" ist über eine Hebelmechanik **72** an dem Schlitten 28 und dem Konsolenteil 46" angeordnet. Die Hebelmechanik 72 weist einen über ein erstes Drehgelenk **74** an der Unterseite des Schlittens 28 angeordneten verschiebbaren Mechanikteil **72'** und einen über ein zweites Drehgelenk **76** an dem drehbaren Konsolenteil 46" angeordneten drehbaren Mechanikteil **72"** auf. Der drehbare Mechanikteil 72" bewegt sich dabei synchron zu dem drehbaren Konsolenteil 46" und der verschiebbare Mechanikteil 72' bewegt sich synchron zu dem Schlitten 28. Der drehbare Mechanikteil 72" ist über eine lose vertikale Durchsteckverbindung **78** an dem verschiebbaren Mechanikteil 72' angeordnet. Die Durchsteckverbindung 78 ist im Rotationszentrum des drehbaren Konsolenteils 46" angeordnet und ermöglicht eine translatorische Vertikalbewegung sowie eine Rotationsbewegung zwischen dem verschiebbaren und dem drehbaren Mechanikteil 72', 72".

Im Verriegelungszustand (siehe Fig. 3) wird die unmittelbare translatorische Bewegung des drehbaren Konsolenteils 46" durch die Verriegelungsvorrichtung 70 blockiert und in Folge dessen die translatorische Bewegung des angeordneten undrehbaren Konsolenteils 46', des Schlittens 28 sowie des Führungsmittels 36 entlang der Führung 30 unterbunden. Mit anderen Worten verhindert die Verriegelungsvorrichtung 70 im verriegelten Zustand (siehe Fig. 3) die translatorische Relativbewegung zwischen Sitz 64 und Bodenplatte 24.

In einem unbelasteten Zustand der Hebelmechanik 72 - ohne äußere Einwirkung durch einen Benutzer - befindet sich die Hebelmechanik 72 in einer Nulllage und die Verriegelungsvorrichtung 70 in einem verriegelten Zustand. Hierdurch kann eine unbeabsichtigte translatorische Bewegung des Sitzes 64 verhindert werden. Die Durchsteckverbindung 78 befindet sich in der Nulllage in einer maximalen Einsteckposition. Mit anderen Worten lässt sich der verschiebbare Mechanikteil 72' relativ zum drehbaren Mechanikteil 72" in vertikaler Richtung entlang der Durchsteckverbindung 78 nur nach unten bewegen.

Die Hebelmechanik 72 weist ein im zweiten Drehgelenk 76 angeordnetes Betätigungsglied **80** in Form eines Hebels zur Drehmomentübertragung auf die Hebelmechanik 72 auf. Das Betätigungsglied 80 bildet bei Ausrichtung des Sitzes 64 in Längsrichtung 38 der Baumaschine 10 einen Hebelarm in Längsrichtung 38 der Baumaschine 10 aus. Hierbei sei jedoch bemerkt, dass die Ausrichtung des Hebels lediglich in Bezug auf die Bedienung durch den Benutzer relevant ist, da die mechanische Kopplung des drehbaren Mechanikteils 72" mit dem verschiebbaren Mechanikteil 72' im Rotationszentrum des drehbaren Konsolenteils 46" erfolgt und die mechanische Funktion somit unabhängig von einer Verdrehung des Sitzes 64 relativ zur Bodenplatte 24 ist.

Fig. 4 zeigt die Verriegelungsvorrichtung 70 in einem unverriegelten Zustand. Durch eine Drehmomentbeaufschlagung auf das zweite Drehgelenk 76 in Folge einer Abwärtsbewegung (in Richtung der Bodenplatte 24) des Betätigungsglieds 80 erfolgt eine Verdrehung eines Kipphebels **82** des drehbaren Mechanikteils 72", wodurch die Durchsteckverbindung 78 in vertikaler Richtung nach unten bewegt wird. Die Abwärtsbewegung der Durchsteckverbindung 78 bewirkt einenends das Absenken eines Kipphebels **84** des verschiebbaren Mechanikteils 72' und in Folge der drehbaren Anordnung des Kipphebels 84 an dem ersten Drehgelenk 74, anderenends das Anheben der an dem Ende des Kipphebels 84 angeordneten beweglichen Verriegelungskomponente 70". Hierdurch wird die bewegliche Verriegelungskomponente 70" aus ihrem Eingriff an der unbeweglichen Verriegelungskomponente 70' vertikal nach oben ausgelenkt. Die Blockade der Bewegung in Richtung der Führung 30 besteht somit nicht mehr und der Sitz 64 lässt sich in seiner Relativposition zur Bodenplatte 24 mitsamt der Sitzkonsole 46 und dem Schlitten 28 entlang der durch die Führung 30 bestimmten Richtung verstellen. Ist die gewünschte Verstellung des Sitzes 64 erfolgt und wird das Drehmoment auf die Hebelmechanik 72 durch Loslassen des Betätigungsglieds 80 aufgehoben, kehrt die Hebelmechanik 72 durch eine Rückstellvorrichtung **86** in Form eines definierten Gewichts an der beweglichen Verriegelungskomponente 70" in die Nulllage zurück und die bewegliche Verriegelungskomponente 70" senkt sich zurück in den Eingriffszustand mit der unbeweglichen Verriegelungskomponente 70'.

Die Sitzkonsole 46 weist eine Rotationsverriegelung **88** mit einer an dem undrehbaren Konsolenteil 46' unbeweglich angeordneten unbeweglichen Rotationsverriegelungskomponente **88'** in Form eines radial umlaufenden Zahnkranzes und einer an dem drehbaren Konsolenteil 46" um eine horizontale Achse **90** drehbar angeordneten beweglichen Rotationsverriegelungskomponente **88"** in Form eines Riegels. Im Verriegelungszustand der Rotationsverriegelung 88 befindet sich die bewegliche Rotationsverriegelungskomponente 88" im Eingriff mit der unbeweglichen Rotationsverriegelungskomponente 88' und blockiert die Relativbewegung zwischen dem undrehbaren Konsolenteil 46' und dem drehbaren Konsolenteil 46". Mit anderen Worten lässt sich der Sitz 64 im Verriegelungszustand der Rotationsverriegelung 88 nicht um eine vertikale Achse drehen.

In einem unbelasteten Zustand der Hebelmechanik 72 - ohne äußere Einwirkung durch einen Benutzer - befindet sich die Hebelmechanik 72 in der Nulllage und die Rotationsverriegelung 88 in einem verriegelten Zustand. Die drehbare Rotationsverriegelungskomponente 88" ist in der Nulllage der Hebelmechanik 72 lose an dem drehbaren Mechanikteil 72" der Hebelmechanik 72 angeordnet.

Bei Drehmomentbeaufschlagung in Folge einer Abwärtsbewegung des Betätigungsglieds 80 auf den drehbaren Mechanikteil 72" zum Zwecke der Entriegelung der Verriegelungsvorrichtung 70, löst sich das der Durchsteckverbindung 78 gegenüberliegende Ende des Kipphebels 82 des drehbaren Mechanikteils 72" in Folge der Abwärtsbewegung des an der Durchsteckverbindung 78 angeordnete Ende des Kipphebels 82 von der beweglichen Rotationsverriegelungskomponente 88" und bildet einen funktionsbedingten Abstand **92** zu der in ihrer Position verharrenden beweglichen Rotationsverriegelungskomponente 88" aus. Somit kann sichergestellt werden, dass bei einer Entriegelung der Verriegelungsvorrichtung 70 keine gleichzeitige Entriegelung der Rotationsverriegelung 88 erfolgt.

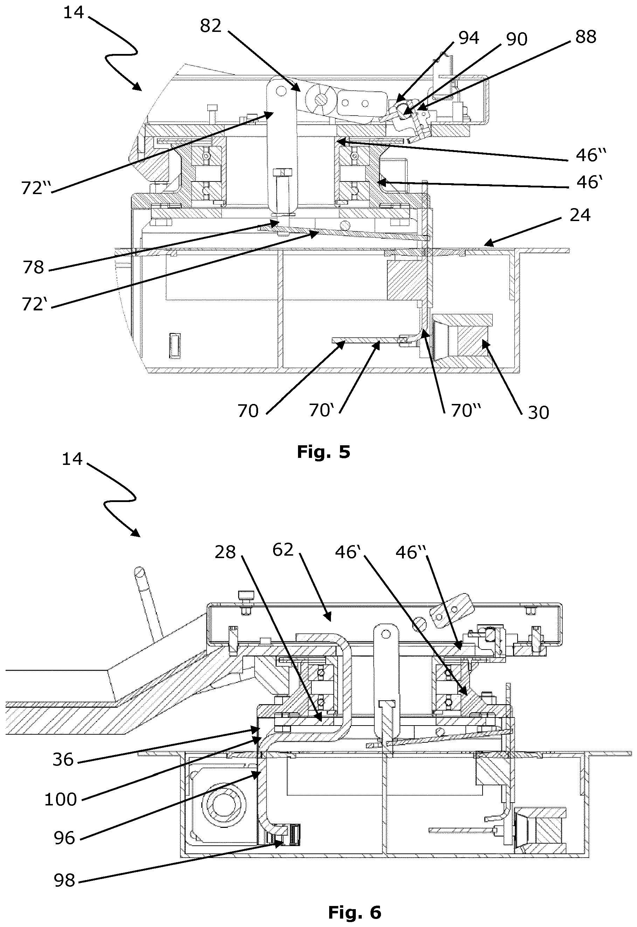

**Fig. 5** zeigt den entriegelten Zustand der Rotationsverriegelung 88 des Bedienstands 14 aus den vorhergehenden Figuren. Durch eine Aufwärtsbewegung (in einer von der Bodenplatte 24 wegweisenden Richtung) des Betätigungsglieds 80 wird das an der Durchsteckverbindung 78 angeordnete Ende des Kipphebels 82 des drehbaren Mechanikteils 72" nach oben bewegt.

Hierdurch gleitet die Durchsteckverbindung 78 nach oben aus dem verschiebbaren Mechanikteil 72', ohne diesen in eine Aufwärtsbewegung zu zwingen. Hierdurch verbleibt die bewegliche Verriegelungskomponente 70" im Eingriff mit der unbeweglichen Verriegelungskomponente 70' der Verriegelungsvorrichtung 70 und die Blockade der translatorischen Bewegung entlang der Führung 30 bleibt bestehen. Mit anderen Worten lässt sich der Sitz 64 nicht verschieben.

Zugleich bewirkt das Anheben des an der Durchsteckverbindung 78 angeordneten Endes des Kipphebels 82 des drehbaren Mechanikteils 72" zwangsläufig eine Abwärtsbewegung des an der beweglichen Rotationsverriegelungskomponente 88" lose angeordneten und dem der Durchsteckverbindung 78 gegenüberliegenden Endes des Kipphebels 82. Hierdurch wird die Rotationsverriegelungskomponente 88" in Form des Riegels um die horizontale Achse 90 verdreht und aus dem Eingriff an der unbeweglichen Rotationsverriegelungskomponente 88' in Form des Zahnkranzes ausgelenkt. Durch Entfall der Rotationsverriegelung 88 wird der rotatorische Freiheitsgrad des drehbaren Konsolenteils 46" gegenüber dem undrehbaren Konsolenteils 46' freigegeben und der Sitz 64 lässt sich relativ zur Bodenplatte 24 verdrehen.

Entfällt die Zugwirkung auf das Betätigungsglied 80 kehrt die die Hebelmechanik 72 in die Nulllage zurück und die bewegliche Rotationsverriegelungskomponente 88" dreht sich, gestützt von einer Rückdrehvorrichtung **94** in Form einer Rückstellfeder um die horizontale Achse 90 zurück in den Eingriff mit der unbeweglichen Rotationsverriegelungskomponente 88'. Hierdurch wird ein unkontrolliertes Verdrehen des Sitzes 64 zuverlässig verhindert.

Zusammenfassend lässt sich erkennen, dass das Betätigungsglied 80 durch eine Abwärtsbewegung die Verriegelungsvorrichtung 70 löst und ein Verstellen des Sitzes 64 entlang der Führung 30, ohne Entriegelung der Rotationsverriegelung 88 ermöglicht. Weiterhin kann durch eine Aufwärtsbewegung des Betätigungsglieds 80 die Rotationsverriegelung 88 zum Verdrehen des Sitzes gelöst werden, ohne dabei die Verriegelungsvorrichtung 70 zu lösen. Das Betätigungsglied 80 in Form eines Hebels ist dementsprechend bifunktional ausgebildet. In einer Nulllage der Hebelmechanik 72 sowie des Betätigungsglieds 80 befinden sich sowohl die Verriegelungsvorrichtung 70 als auch die Rotationsverriegelung 88 in verriegeltem Zustand.

**Fig. 6** zeigt einen weiteren parallel zu den Schnitten aus den Fig. 2-5 verlaufenden vertikalen Schnitt durch den Bedienstand 14 und dient der Erläuterung eines Kabelverlaufs **96.** Der Kabelverlauf 96 steht dabei stellvertretend für ein oder mehrere an dem Bedienstand 14 angeordnete Kabel und Leitungen zur Datenübermittlung und Energieversorgung zwischen dem Bedienstands 14 und der Baumaschine 10. Dabei wird der Kabelverlauf 96 im Inneren des Gehäuses 40 durch eine an dem Führungsmittel 36 angeordnete flexible Kabelführung **98** in Form einer Schleppkette gestützt und kann bei Verstellung des Sitzes 64 zusätzliches Kabel bereitstellen und/oder aufnehmen.

Hierdurch wird eine kontrollierte Aufnahme und Abgabe eines Kabels und/oder einer Leitung während des Verstellvorgangs des Sitzes 64 ermöglicht ohne die Gefahr der Kollision des Kabelverlaufs 96 mit beweglichen Komponenten des Bedienstands 14.

Das Führungsmittel 36 weist eine vertikale Führungsmittelausnehmung **100** auf. Die Führungsmittelausnehmung 100 erstreckt sich aus einem unterhalb der Bodenplatte 24 ausgebildeten Bereich des Führungsmittels 36 bis in einen oberhalb der Bodenplatte 24 ausgebildeten Bereich des Führungsmittels 36. Mit anderen Worten weist das Führungsmittel 36 eine Führungsmittelausnehmung 100 auf, durch die sich der Kabelverlauf 96 innerhalb des Führungsmittels 36 von der Unterseite der Bodenplatte 24 zur Oberseite der Bodenplatte 24 erstreckt. Hierdurch kann eine weitere Durchgangsausnehmung in der Bodenplatte 24 vermieden werden. Der Kabelverlauf 96 findet entlang der beweglichen Komponenten des Bedienstands 14 statt.

Über eine Durchgangsausnehmung des Schlittens 28 und die zylindrische Konsolenausnehmung 50 erstreckt sich der Kabelverlauf 96 bis in die oberseitige Plattform 62 des drehbaren Konsolenteils 46" und weiter zum Sitz 64 sowie zum Steuermittel 60.

Unter Vornahme einer Zusammenschau aller Figuren der Zeichnung betrifft die Erfindung einen als austauschbare Montageeinheit ausgebildeten Bedienstand 14 mit einem Schlitten 28 zur translatorischen und einer drehbaren Sitzkonsole 46 zur rotatorischen Verstellung eines Sitzes 64 sowie ein Führerhaus 12 mit einem solchen Bedienstand 14.

### Bezugszeichenliste

Baumaschine **10**;
Führerhaus **12**;
Bedienstand **14** in Form einer austauschbaren Montageeinheit;
Montageöffnung **16**;
lichte Öffnungsweite **18**;
Führerhaustüre **20**;
Rahmenstruktur **22**;
Bodenplatte **24**;
Führerhausboden **26**;
Schlitten **28**;
Führung **30**;
erste Durchgangsausnehmung **32**;
zweite Durchgangsausnehmung **34**;
Führungsmittel **36**;
Buchse **36'**;
Stangenführung **30'** der Führung 30;
Kegelrolle **36"**;
Kegelrollenführung **30"** der Führung 30;
Längsrichtung **38** der Baumaschine 10;
Gehäuse **40**;
Abstreifvorrichtung **42**;
Innenwandung **44**;
Sitzkonsole **46**;
undrehbarer Konsolenteil **46';**
drehbarer Konsolenteil **46"**;
Schraubverbindungen **48**;
zylindrische Konsolenausnehmung **50**;
vertikaler zylindrischer Vorsprung **52**;
radialer Zwischenbereich **54** der Konsolenteile 46', 46";
Kugellager **56**;
radialer Ausleger **58**;
Steuermittel **60**;
oberseitige Plattform **62**;
Sitz **64**;
Höhenverstellung **66**;
Neigungsverstellung **68**;
Verriegelungsvorrichtung **70**;
unbewegliche Verriegelungskomponente **70'**;
bewegliche Verriegelungskomponente **70"**;
Hebelmechanik **72**;
erstes Drehgelenk **74**;
verschiebbaren Mechanikteil **72'**;
zweites Drehgelenk **76**;
drehbaren Mechanikteil **72"**
vertikale Durchsteckverbindung **78**;
Betätigungsglied **80**;
Kipphebel **82** des drehbaren Mechanikteils 72";
Kipphebel **84** des verschiebbaren Mechanikteils 72';
Rückstellvorrichtung **86**;
Rotationsverriegelung **88**;
unbeweglichen Rotationsverriegelungskomponente **88'**;
horizontale Achse **90**;
beweglichen Rotationsverriegelungskomponente **88"**;
funktionsbedingten Abstand **92**;
Rückdrehvorrichtung **94**;
Kabelverlauf **96**;
flexible Kabelführung **98**;
vertikale Führungsmittelausnehmung **100**;
vertikale Rotationsachse **R.**

## Patentansprüche

1. Bedienstand (14) als austauschbare Montageeinheit ausgebildet, insbesondere für eine mobile Baumaschine (10), mit einer Bodenplatte (24), einem oberhalb der Bodenplatte (24) angeordneten Schlitten (28), einer oberhalb am Schlitten (28) angeordneten Sitzkonsole (46) und einer unterhalb der Bodenplatte (24) angeordneten Führung (30), wobei
- die Bodenplatte (24) eine erste und eine zweite Durchgangsausnehmung (32, 34), insbesondere jeweils in Form einer Schlitzöffnung, ausbildet; und wobei
- die Führung (30), insbesondere in Form einer Linearführung, ausgebildet ist; und wobei
- der Schlitten (28) und die Sitzkonsole (46) oberhalb der Bodenplatte (24) angeordnet sind; und wobei
- der Schlitten (28) über Führungsmittel (36), die die erste Durchgangsausnehmung (32) und die zweite Durchgangsausnehmung (34) der Bodenplatte (24) durchgreifen an der Führung (30) geführt ist; und wobei
- der Schlitten (28) translatorisch in Richtung der Führung (30) bewegbar ist; und wobei
- die Sitzkonsole (46) um eine Rotationsachse (R) drehbar ist;

2. Bedienstand nach Anspruch 1, **dadurch gekennzeichnet, dass** in der ersten und/oder zweiten Durchgangsausnehmung (32, 34) der Bodenplatte (24) eine Abstreifvorrichtung (42), insbesondere eine Bürstendichtung, angeordnet ist.

3. Bedienstand nach Anspruch 1 oder 2, wobei die Sitzkonsole (46) eine Hebelmechanik (72) mit einem bifunktionalen Betätigungsglied (80), insbesondere einem Hebel, umfasst.

4. Bedienstand nach Anspruch 3, wobei sich das Betätigungsglied (80) über zumindest zwei, insbesondere drei, Seiten der Sitzkonsole (46) erstreckt.

5. Bedienstand nach Anspruch 4, wobei das Betätigungsglied (80) in Form eines gebogenen Rohrs und/oder Blech-Biegeteils ausgebildet ist und zumindest zwei parallele Teilabschnitte, insbesondere in Form eines Bügels, zur besseren Bedienbarkeit ausbildet.

6. Bedienstand nach einem der Ansprüche 3 bis 5, wobei die Hebelmechanik (72) zur Verriegelung und zur Entriegelung des Schlittens (28) und/oder der Sitzkonsole (46) ausgebildet ist.

7. Bedienstand nach Anspruch 6, wobei die Hebelmechanik (72) unterhalb der Bodenplatte (28) eine Verriegelungsvorrichtung (70), insbesondere ein Zahnsegment, aufweist.

8. Bedienstand nach Anspruch 6 oder 7, wobei die Hebelmechanik (72) dazu ausgebildet ist, den Schlitten (28) durch Bewegung des bifunktionalen Betätigungsglieds (80) in Richtung der Bodenplatte (24) zu entriegeln.

9. Bedienstand nach Anspruch 6, 7 oder 8, wobei die Hebelmechanik (72) dazu ausgebildet ist, die Sitzkonsole (46) durch Bewegung des bifunktionalen Betätigungsgliedes (80) in einer von der Bodenplatte (24) wegweisenden Richtung zu entriegeln.

10. Bedienstand nach einem der Ansprüche 6 bis 9, wobei die Hebelmechanik (72) dazu ausgebildet ist, bei Entriegelung des Schlittens (28) die Sitzkonsole (46) zu verriegeln und/oder bei Entriegelung der Sitzkonsole (46) den Schlitten (28) zu verriegeln.

11. Bedienstand nach einem der vorhergehenden Ansprüche wobei die Führung (30) mehrteilig ausgebildet ist.

12. Bedienstand nach Anspruch 11, wobei die Führung (30) eine Stangenführung (30') und/oder eine Rollenführung, insbesondere eine Kegelrollenführung (30"), aufweist.

13. Bedienstand nach Anspruch 12 wobei die Rollenführung eine an der Rollenführung angeordnete, der Rollenführung vorlaufende und nachlaufende Abstreifvorrichtung, insbesondere Elastomer-Dichtlippen und/oder Abstreifbürsten, aufweist.

14. Bedienstand nach einem der vorhergehenden Ansprüche, wobei der Schlitten (28) und/oder die Sitzkonsole (46) eine Kabeldurchführung aufweist und elektrische Steuerleitungen des Bedienstands (14) durch die erste und/oder zweite Durchgangsausnehmung (32, 34), insbesondere über eines der Führungsmittel (36), geführt sind.

15. Bedienstand nach einem der vorhergehenden Ansprüche, wobei die erste und/oder die zweite Durchgangsausnehmung (32, 34) zur Durchführung einer Leitung ausgebildet ist.

16. Bedienstand nach einem der vorhergehenden Ansprüche, wobei an dem Führungsmittel (36) ein Kabelkanal, insbesondere eine Schleppkette, angeordnet ist.

17. Bedienstand nach einem der vorhergehenden Ansprüche, wobei Führungsmittel (36) zur Durchführung einer Leitung, insbesondere eines Kabels, ausgebildet ist.

18. Bedienstand nach Anspruch 17, wobei das Führungsmittel (36) eine Armierung im überwiegenden Bereich der Kabeldurchführung aufweist.

19. Bedienstand nach einem der vorhergehenden Ansprüche, wobei die Sitzkonsole (46) relativ zum Schlitten (28) neigbar ausgebildet ist.

20. Führerhaus (12) für eine mobile Baumaschine (10) mit einer seitlichen und/oder oberseitigen Öffnung (16), die dazu ausgebildet ist, eine Montageeinheit nach einem der vorhergehenden Ansprüche durch Einschieben und/oder Einsetzen in dem Führerhaus (12) anzuordnen.

## Claims

1. Operator platform (14) designed as an exchangeable assembly unit, in particular for a mobile construction machine (10), comprising a base plate (24), a carriage (28) arranged above the base plate (24), a seat mounting (46) arranged above and on the carriage (28), and a guide (30) arranged below the base plate (24), wherein
- the base plate (24) forms a first and a second through hole (32, 34), in particular each in the form of a slot opening; and wherein
- the guide (30) is designed, in particular, in the form of a linear guide; and wherein
- the carriage (28) and the seat mounting (46) are arranged above the base plate (24); and wherein
- the carriage (28) is guided on the guide (30) via guide means (36) which pass through the first through hole (32) and the second through hole (34) of the base plate (24); and wherein
- the carriage (28) is movable translationally toward the guide (30); and wherein
- the seat mounting (46) is rotatable about an axis of rotation (R).

2. Operator platform according to claim 1, **characterized in that** a scraping device (42), in particular a brush seal, is arranged in the first and/or second through hole (32, 34) of the base plate (24).

3. Operator platform according to either claim 1 or claim 2, wherein the seat mounting (46) comprises a lever mechanism (72) with a bifunctional actuating element (80), in particular a lever.

4. Operator platform according to claim 3, wherein the actuating element (80) extends over at least two, in particular three, sides of the seat mounting (46).

5. Operator platform according to claim 4, wherein the actuating element (80) is designed in the form of a bent tube and/or bent sheet metal part and forms at least two parallel sections, in particular in the form of a bracket, for better operability.

6. Operator platform according to any of claims 3 to 5, wherein the lever mechanism (72) is designed for locking and unlocking the carriage (28) and/or the seat mounting (46).

7. Operator platform according to claim 6, wherein the lever mechanism (72) has a locking device (70), in particular a toothed segment, below the base plate (28).

8. Operator platform according to either claim 6 or claim 7, wherein the lever mechanism (72) is designed to unlock the carriage (28) by moving the bifunctional actuating element (80) in the direction of the base plate (24).

9. Operator platform according to claim 6, 7, or 8, wherein the lever mechanism (72) is designed to unlock the seat mounting (46) by moving the bifunctional actuating element (80) in a direction pointing away from the base plate (24).

10. Operator platform according to any of claims 6 to 9, wherein the lever mechanism (72) is designed to lock the seat mounting (46) when the carriage (28) is unlocked and/or to lock the carriage (28) when the seat mounting (46) is unlocked.

11. Operator platform according to any of the preceding claims, wherein the guide (30) is constructed in multiple parts.

12. Operator platform according to claim 11, wherein the guide (30) has a rod guide (30') and/or a roller guide, in particular a tapered roller guide (30").

13. Operator platform according to claim 12, wherein the roller guide has a scraping device, in particular elastomer sealing lips and/or scraping brushes, which scraping device is arranged on the roller guide and runs in front of and behind the roller guide.

14. Operator platform according to any of the preceding claims, wherein the carriage (28) and/or the seat mounting (46) has a cable bushing, and electrical control lines of the operator platform (14) are guided through the first and/or second through hole (32, 34), in particular via one of the guide means (36).

15. Operator platform according to any of the preceding claims, wherein the first and/or the second through hole (32, 34) is designed for the passage of a line.

16. Operator platform according to any of the preceding claims, wherein a cable duct, in particular a drag chain, is arranged on the guide means (36).

17. Operator platform according to any of the preceding claims, wherein the guide means (36) is designed for the passage of a line, in particular a cable.

18. Operator platform according to claim 17, wherein the guide means (36) has reinforcement in the predominant region of the cable bushing.

19. Operator platform according to any of the preceding claims, wherein the seat mounting (46) is designed to be reclinable relative to the carriage (28).

20. Driver's cab (12) for a mobile construction machine (10) having a lateral and/or upper-side opening which is designed to arrange an assembly unit, in particular according to any of the preceding claims, by sliding and/or inserting it into the driver's cab (12).

## Revendications

1. Poste de manoeuvre (14) conçu en tant qu'unité de montage remplaçable, en particulier pour un engin mobile de chantier (10), comprenant une plaque de base (24), un chariot (28) disposé au-dessus de ladite plaque de base (24), une console d'assise (46) implantée en partie haute sur ledit chariot (28), et un élément de guidage (30) situé au-dessous de ladite plaque de base (24), sachant que
- la plaque de base (24) donne naissance à des premier et second évidements de passage (32, 34) revêtant respectivement, en particulier, la forme d'une ouverture de fente ; et sachant que
- l'élément de guidage (30) est notamment réalisé sous la forme d'un élément de guidage linéaire ; et sachant que
- le chariot (28) et la console d'assise (46) se trouvent au-dessus de la plaque de base (24) ; et sachant que
- ledit chariot (28) est guidé sur ledit élément de guidage (30), par l'intermédiaire de moyens de guidage (36) qui traversent le premier évidement de passage (32) et le second évidement de passage (34) de ladite plaque de base (24) ; et sachant que
- ledit chariot (28) peut être animé de mouvements translatoires dans la direction dudit élément de guidage (30) ; et sachant que
- ladite console d'assise (46) peut tourner autour d'un axe de rotation (R).

2. Poste de manoeuvre selon la revendication 1, **caractérisé par le fait qu'**un dispositif racleur (42), en particulier une garniture d'étanchement à brosse, est logé(e) dans le(s) premier et/ou second évidement(s) de passage (32, 34) de la plaque de base (24).

3. Poste de manoeuvre selon la revendication 1 ou 2, dans lequel la console d'assise (46) inclut un mécanisme (72) à levier comportant un organe d'actionnement (80) bifonctionnel, un levier en particulier.

4. Poste de manoeuvre selon la revendication 3, dans lequel l'organe d'actionnement (80) s'étend sur au moins deux, en particulier trois côtés de la console d'assise (46).

5. Poste de manoeuvre selon la revendication 4, dans lequel l'organe d'actionnement (80) est réalisé sous la forme d'un tube cintré et/ou d'une pièce cintrée en tôle, et donne naissance à au moins deux régions partielles parallèles revêtant notamment la forme d'un étrier, en vue d'améliorer l'opérabilité.

6. Poste de manoeuvre selon l'une des revendications 3 à 5, dans lequel le mécanisme (72) à levier est conçu pour verrouiller et pour déverrouiller le chariot (28) et/ou la console d'assise (46).

7. Poste de manoeuvre selon la revendication 6, dans lequel le mécanisme (72) à levier est pourvu d'un dispositif de verrouillage (70) au-dessous de la plaque de base (24), en particulier d'un segment denté.

8. Poste de manoeuvre selon la revendication 6 ou 7, dans lequel le mécanisme (72) à levier est conçu pour déverrouiller le chariot (28) par mouvement imprimé, à l'organe d'actionnement (80) bifonctionnel, en direction de la plaque de base (24).

9. Poste de manoeuvre selon la revendication 6, 7 ou 8, dans lequel le mécanisme (72) à levier est conçu pour déverrouiller la console d'assise (46) par mouvement imprimé, à l'organe d'actionnement (80) bifonctionnel, dans une direction s'éloignant de la plaque de base (24).

10. Poste de manoeuvre selon l'une des revendications 6 à 9, dans lequel le mécanisme (72) à levier est conçu pour verrouiller la console d'assise (46) à l'état déverrouillé du chariot (28), et/ou pour verrouiller ledit chariot (28) à l'état déverrouillé de ladite console d'assise (46).

11. Poste de manoeuvre selon l'une des revendications précédentes, dans lequel l'élément de guidage (30) est réalisé en plusieurs parties.

12. Poste de manoeuvre selon la revendication 11, dans lequel l'élément de guidage (30) est doté d'un guidage par tige (30') et/ou d'un guidage par rouleau, notamment d'un guidage par rouleau conique (30").

13. Poste de manoeuvre selon la revendication 12, dans lequel le guidage par rouleau est muni d'un dispositif racleur installé sur ledit guidage par rouleau, notamment de lèvres d'étanchement en élastomère et/ou de brosses racleuses agissant en amont et en aval dudit guidage par rouleau.

14. Poste de manoeuvre selon l'une des revendications précédentes, dans lequel le chariot (28) et/ou la console d'assise (46) comporte(nt) une traversée de câble, et des conducteurs électriques de commande dudit poste de manoeuvre (14) sont guidés à travers le(s) premier et/ou second évidement(s) de passage (32, 34), en particulier par l'intermédiaire de l'un des moyens de guidage (36).

15. Poste de manoeuvre selon l'une des revendications précédentes, dans lequel le(s) premier et/ou second évidement(s) de passage (32, 34) est (sont) conçu(s) en vue du passage traversant d'un conducteur.

16. Poste de manoeuvre selon l'une des revendications précédentes, dans lequel un canal passe-câble, en particulier une chaîne porte-câble, se trouve sur le moyen de guidage (36).

17. Poste de manoeuvre selon l'une des revendications précédentes, dans lequel des moyens de guidage (36) sont conçus en vue du passage traversant d'un conducteur, d'un câble en particulier.

18. Poste de manoeuvre selon la revendication 17, dans lequel le moyen de guidage (36) est nanti d'un renfort dans la région prédominante de la traversée de câble.

19. Poste de manoeuvre selon l'une des revendications précédentes, dans lequel la console d'assise (46) est conçue avec faculté d'inclinaison par rapport au chariot (28).

20. Cabine de conduite (12) dévolue à un engin mobile de chantier (10), comportant une ouverture (16) latérale et/ou supérieure, destinée à l'insertion par coulissement et/ou par mise en place, dans ladite cabine de conduite (12), d'une unité de montage conforme à l'une des revendications précédentes.
